# EUROPEAN PATENT APPLICATION

(11) **EP 3 926 714 A1**
(43) Date of publication of application: **22.12.2021**
(21) Application number: 20755935.2
(22) Date of filing: 13.02.2020
(51) Int. Cl.: H01M 4/38, C01B 33/02, C01B 33/06, H01M 4/134, H01M 4/58, H01M 10/052, H01M 10/0562

(54) **ACTIVE MATERIAL**

(30) Priority: 13.02.2019 JP 2019023488
(71) Applicant: Mitsui Mining & Smelting Co., Ltd., Shinagawa-ku Tokyo 141-8584 (JP)
(72) Inventor: MITSUMOTO Tetsuya, Takehara-shi, Hiroshima 725-0025 (JP); IDE Hitohiko, Ageo-shi, Saitama 362-0021 (JP); KAI Takuya, Ageo-shi, Saitama 362-0021 (JP)
(74) Representative: Novagraaf Technologies
(86) International application number: PCT/JP2020/005505
(87) International publication number: WO 2020/166655

(57) **Abstract**

Provided is a novel active material capable of enhancing cycle characteristics, reducing or eliminating plateau regions in a discharge profile, and also enhancing high-rate characteristics.

The active material comprises silicon and a compound represented by chemical formula MₓSi_{y} (where x and y satisfy 0.1 ≤ x/y ≤ 7.0, and M represents one or two or more of metalloid elements other than Si and metal elements), wherein the content of Si elements in the active material is more than 50 wt%, the content of M in the active material is less than 38 wt%, and the content of oxygen (O) elements in the active material is less than 30 wt%; wherein, with regard to D₅₀ and Dₘₐₓ measured by a laser diffraction scattering-type particle size distribution measurement method (referred to as "D₅₀" and "Dₘₐₓ" respectively), the D₅₀ is less than 4.0 µm and the Dₘₐₓ is less than 25 µm; and wherein, in an X-ray diffraction pattern measured by an X-ray diffractometer (XRD) using CuKα1 rays, the full width at half maximum of a peak A appearing at 2θ = 28.42° ± 1.25° is 0.25° or more, and when the peak intensity of a peak B belonging to the compound represented by the chemical formula MₓSi_{y} is defined as I_{B} and the peak intensity of the peak A is defined as I_{A}, the ratio (I_{A}/I_{B}) of the I_{A} to the I_{B} is less than 1.

## Description

### TECHNICAL FIELD

The present invention relates to an active material, and to a negative electrode and a solid-state battery using the same.

### BACKGROUND ART

In recent years, with the development in applications such as electric vehicles and smart phones, there is an increasing demand for higher capacity and longer life of batteries. Most of the negative electrodes of commercially available batteries currently use a carbon material (also referred to as "graphite") as the negative electrode active material. However, the theoretical limit has already been reached in terms of capacity, and the development of a new negative electrode active material is demanded. One of the promising candidates thereof is an active material containing silicon (also referred to as "Si-containing active material").

The Si-containing active material has a potential that the capacity per mass is 5 to 10 times that of graphite. On the other hands, the Si-containing active material has a problem that the electron conductivity is not high compared with graphite.

Thus, in order to increase the electron conductivity of the Si-containing active material, for example, it has been suggested to add a conductive auxiliary agent for the purpose of imparting electron conductivity between a current collector and the active material. For example, Patent Document 1 discloses that the periphery of core particles containing silicon is coated with a silicon solid solution such as Mg₂Si, CoSi, or NiSi, and the surface is further coated with a conductive material such as graphite or acetylene black.

The Si-containing active material undergoes large volumetric changes caused by intercalation and deintercalation of lithium ions and repeats expansion and contraction during charge and discharge cycles. Thus, the Si-containing active material also has a problem that separation from the conductive auxiliary agent tends to occur as charging and discharging are repeated, resulting in deterioration of cycles and reduction of energy density, which reduces battery performance and safety of the battery.

In order to solve this problem, for example, Patent Document 2 discloses active material particles containing silicon and having an average particle diameter of 5 µm or more and 25 µm or less. The Patent Document 2 states that, when the average particle diameter of the active material particles is adjusted to 5 µm or more, the specific surface area of the original active material can be reduced, the contact area between an electrolyte and the newly generated surfaces of the active material can be thereby reduced, and thus the effects of enhancing the cycle characteristics and suppressing the swelling of the active material are increased.

Patent Document 3 discloses an electrode material for lithium secondary batteries as an electrode material having high efficiency in intercalating and deintercalating of lithium, wherein in an electrode material for lithium secondary batteries composed of solid-state alloy particles containing silicon as a main component, the solid-state alloy particles have microcrystals or amorphous materials composed of elements other than silicon, dispersed in microcrystalline silicon or amorphized silicon.

Patent Document 4 discloses a negative electrode active material for lithium secondary batteries containing silicon, copper, and oxygen as main constituent elements, wherein the negative electrode active material contains Cu₃Si and silicon particles having an average crystallite diameter (Dx) of 50 nm or less measured by an X-ray diffraction method, and the peak intensity ratio (Cu₃Si/Si) calculated from the measurement result of XRD is 0.05 to 1.5.

### CITATION LIST

### PATENT DOCUMENT

Patent Document 1: Japanese Patent Laid-Open No. 2000-285919
Patent Document 2: Japanese Patent Laid-Open No. 2008-123814
Patent Document 3: Japanese Patent Laid-Open No. 2010-135336
Patent Document 4: Japanese Patent Laid-Open No. 2016-035825

### SUMMARY OF THE INVENTION

### PROBLEM TO BE SOLVED BY THE INVENTION

Patent Document 3 discloses the use of a material in which microcrystals or amorphous materials composed of elements other than silicon are dispersed in silicon, or a material in which an alloy of elements of silicon is dispersed in silicon, as a negative electrode active material. Since only silicon in the negative electrode active material contributes to the intercalation and deintercalation of lithium ions, the reduction in the percentage of silicon occupied may reduce the capacity, but it should theoretically improve the cycle characteristics by reducing the expansion and contraction of the negative electrode active material.

However, for example, when an alloy of elements other than silicon is mixed in silicon and actually used as a negative electrode active material for lithium secondary batteries, it has been found that the cycle characteristics cannot be improved to the extent expected.

In addition, the use of a Si-containing negative electrode active material in combination with a carbon material such as graphite as a negative electrode active material has been examined. However, when the Si-containing negative electrode active material is used as a negative electrode active material in combination with a carbon material, there is a problem that both of the materials operate separately depending on the differences in charge and discharge curve profiles, which makes difficult to control.

As a result of examining this point by the present inventors, it has been found that, as compared with the discharge profile of the carbon material (graphite), the discharge profile of the Si-containing negative electrode active material has a plateau region different from the operating potential of the carbon material (graphite), and thus when the Si-containing negative electrode active material is used as a negative electrode active material in combination with the carbon material, a step shape is generated in the charge and discharge curve, which is one of the causes of the difficulty in control. Therefore, it can be considered that by reducing or eliminating the plateau region in the discharge profile of the Si-containing negative electrode active material, the step shape at the rising part of the charge and discharge curve can be reduced or eliminated to facilitate the control.

Furthermore, lithium secondary batteries are required to have rapid charge and discharge characteristics, and improvements in high-rate characteristics has been also demanded.

Thus, the present invention provides a novel active material containing silicon capable of enhancing the cycle characteristics, reducing or eliminating the plateau region in the discharge profile, and also enhancing the high-rate characteristics.

### MEANS FOR SOLVING PROBLEM

The present invention proposes an active material containing silicon and a compound represented by chemical formula MₓSi_{y} (where x and y satisfy 0.1 ≤ x/y ≤ 7.0, and M represents one or two or more of metalloid elements other than Si and metal elements), wherein the content of Si elements in the active material is more than 50 wt%, the content of M in the active material is less than 38 wt%, and the content of oxygen (O) elements in the active material is less than 30 wt%; wherein, with regard to D₅₀ and Dₘₐₓ measured by a laser diffraction scattering-type particle size distribution measurement method (referred to as "D₅₀" and "Dₘₐₓ" respectively), the D₅₀ is less than 4.0 µm and the Dₘₐₓ is less than 25 µm; and
wherein, in an X-ray diffraction pattern measured by an X-ray diffractometer (XRD) using CuKa1 rays, the full width at half maximum of a peak A appearing at 2θ = 28.42° ± 1.25° is 0.25° or more, and when the peak intensity of a peak B belonging to the compound represented by the chemical formula MₓSi_{y} is defined as I_{B} and the peak intensity of the peak A is defined as I_{A}, the ratio (I_{A}/I_{B}) of the I_{A} to the I_{B} is less than 1.

### EFFECT OF THE INVENTION

The active material proposed by the present invention can be used as a negative electrode active material. Also, the active material of the present invention can be suitably used for solid-state batteries. The active material of the present invention is particularly advantageous for use in solid-state batteries containing a sulfide solid electrolyte as a solid electrolyte. Solid-state batteries using the active material of the present invention enables the cycle characteristics to be enhanced, and the high-rate characteristics to be improved. Moreover, the plateau region in the discharge profile can be reduced or eliminated.

Therefore, the active material proposed by the present invention is not only effective when used alone, but can also be suitably used, for example, in combination with a carbon material (graphite) as a negative electrode active material for solid-state batteries, especially solid-state secondary batteries such as solid-state lithium secondary batteries.

### BRIEF DESCRIPTION OF DRAWINGS

FIG. 1 is a graph showing a discharge profile of a solid-state battery using a sample obtained in Example 1 as an active material.
FIG. 2 is a graph showing a discharge profile of a solid-state battery using a sample obtained in Comparative Example 1 as an active material.
FIG. 3 is an XRD pattern of a silicon powder material, which is a standard sample for X-ray diffraction manufactured by NIST.
FIG. 4 is a graph comparing and collating diffraction patterns of a sample obtained in Reference Example 1, and cards having ICDD card numbers: 00-005-0565 (chemical formula: Si) and 01-071-0187 (chemical formula: TiSi₂).

### MODE(S) FOR CARRYING OUT THE INVENTION

Next, the present invention will be described based on an example of embodiments. However, the present invention is not limited to the embodiments that will be described below.

### <Present Active Material

The active material according to an example of the present embodiment (hereinafter, referred to as "present active material") contains silicon and a compound represented by chemical formula MₓSi_{y} (where x and y satisfy 0.1 ≤ x/y ≤ 7.0, and M represents one or two or more of metalloid elements other than Si and metal elements).

### (Silicon)

In the present active material, silicon also means Si capable of intercalating and deintercalating lithium ions. That is, the present active material has a function as an active material by containing silicon.

Here, silicon mainly refers to pure silicon, but it may contain an element that dissolves in Si to form a Si solid solution. In this case, the Si solid solution may have a function as an active material.

The ratio of silicon to the present active material is preferably 30 wt% or more, more preferably 40 wt% or more, and even more preferably 50 wt% or more of the present active material.

In order for the ratio of silicon to affect the charge and discharge capacity and increase the charge and discharge capacity in the present active material, silicon is preferably a main component of the present active material. From such a viewpoint, the ratio of silicon to the present active material is preferably more than 50 wt%, and particularly preferably 60 wt% or more.

### (Chemical Formula MₓSi_{y})

The present active material contains a compound represented by chemical formula MₓSi_{y} (where x and y satisfy 0.1 ≤ x/y ≤ 7.0, and M represents one or two or more of metalloid elements other than Si and metal elements).

By containing the compound represented by MₓSi_{y} in the present active material, the cycle characteristics can be further enhanced, the plateau region in the discharge profile can be reduced or eliminated, and the high-rate characteristics can be improved.

The compound represented by the chemical formula MₓSi_{y} (0.1 ≤ x/y ≤ 7.0) is so-called silicide.

The "M" in the chemical formula MₓSi_{y} represents one or two or more of metalloid elements other than Si and metal elements. That is, M may be a metalloid element other than Si, a metal element, or a combination of two or more of the metalloid and metal elements.

Examples of the metalloid element and the metal element include elements such as B, Ti, V, Mn, Fe, Co, Ni, Cu, Y, Zr, Nb, Mo, Ta, and W. Among them, B, Ti, Mn, Fe, Co, Ni, Y, Zr, Nb, Mo, Ta, and W are preferred. Further, among them, B, Ti, Mn, Fe, Co, and Ni are preferred, and among them, B, Ti, Mn, and Fe are particularly preferred.

The "x/y" in the chemical formula MₓSi_{y} is preferably 0.1 or more and 7.0 or less, more preferably 0.2 or more or 4.0 or less, even more preferably 0.3 or more or 3.0 or less, and still more preferably 0.4 or more or 2.0 or less.

The "x" in the chemical formula MₓSi_{y} is preferably 0.5 or more and 15 or less, more preferably 0.75 or more or 13 or less, and even more preferably 1 or more or 11 or less.

The "y" is preferably 0.5 or more and 27 or less, more preferably 0.75 or more or 23 or less, and even more preferably 1 or more or 19 or less.

Specific examples of the silicide include titanium silicide (TiSi₂, TiSi, Ti₅Si₄, Ti₅Si₃), cobalt silicide (CoSi₂, CoSi, Co₂Si, Co₃Si), nickel silicide (NiSi₂, NiSi, Ni₃Si₂, Ni₂Si, Ni₅Si₂, Ni₃Si), manganese silicide (Mn₁₁Si₁₉, MnSi, Mn₅Si₃, Mn₅Si₂, Mn₃Si), iron silicide (FeSi₃, FeSi, Fe₅Si₃, Fe₃Si), niobium silicide (NbSi₂, Nb₅Si₃, Nb₃Si), copper silicide (Cu₃Si, Cu₆Si, Cu₇Si), boron silicide (B₃Si, B₆Si), zirconium silicide (ZrSi₂, ZrSi, Zr₅Si₄, Zr₃Si₂, Zr₅Si₃, Zr₂Si, Zr₄Si), vanadium silicide (VSi₂, V₆Si₅, V₅Si₃, V₃Si), tungsten silicide (WSi₂, W₅Si₃), tantalum silicide (TaSi₂, Ta₅Si₃, Ta₂Si, Ta₃Si), and yttrium silicide (Y₃Si₅, YSi, Y₅Si₄, Y₅Si₃). However, the present invention is not limited to these.

### (Other Components)

The present active material may contain "other components" as necessary.

Examples of the "other components" include silicon-containing materials such as a silicon compound. Examples of the silicon compound include Si₃N₄ and SiC.

For example, the "other components" may be contained not only as constituent elements of the compound represented by the chemical formula MₓSi_{y}, but also as metals, oxides, carbides, nitrides, and the like having one or two or more elements of metalloid elements other than Si and metal elements. Specific examples thereof include compounds of metals, oxides, carbides, nitrides, and the like having one or two or more elements of H, Li, B, C, O, N, F, Na, Mg, Al, P, K, Cu, Ca, Ga, Ge, Ag, In, Sn, and Au. Among them, the elements are preferably one or two or more elements of H, Li, B, C, O, N, F, Na, Mg, Al, P, K, Ca, Ga, Ge, Ag, In, Sn, and Au, and particularly preferably one or two or more elements of H, Li, B, C, O, N, F, Al, P, and Sn.

Here, the content of the "other components" in the present active material is preferably less than 15 at%, more preferably more than 0 at% or less than 12 at%, even more preferably more than 1 at% or less than 10 at%, and still more preferably more than 2 at% or less than 7 at%.

When the present active material contains carbon (C) elements as the "other components", the content thereof is preferably less than 5 wt%, more preferably less than 4 wt%, and particularly preferably less than 3 wt% of the amount of the present active material. By having the above-mentioned upper limit for the content of C elements in the present active material, the decrease in capacity can be suppressed. In the evaluation of Examples and Comparative Examples described later, the numerical value of the charge capacity is the basis of the present invention, and the present invention is distinct from active materials containing a large amount of C and having a low capacity.

### (Carbon Component Species)

When the present active material contains carbon (C) elements as the "other components", the carbon can be broadly divided into carbon derived from an organic material and carbon corresponding to an inorganic material.

Examples of the carbon corresponding to an inorganic material include diamond and graphite. Carbon materials having a well-formed layered structure, such as graphite, store a large amount of Li (≥ 300 mAh/g), and are therefore not preferred as the carbon corresponding to an inorganic material contained in the present active material. As the carbon corresponding to an inorganic material contained in the present active material, those having a low Li storage capacity (< 300 mAh/g) are preferred. Specific examples thereof include activated carbon, carbon black, coke, carbon fiber, and amorphous carbon. Among them, activated carbon, coke, carbon fiber, and amorphous carbon are preferred.

Thus, as a carbon component species contained in the present active material, the carbon derived from an organic material or the carbon corresponding to an inorganic material having a low Li storage capacity (< 300 mAh/g) (e.g. activated carbon, coke, carbon fiber, amorphous carbon) is preferred.

The present active material may contain inevitable impurities derived from raw materials.

However, the content of inevitable impurities in the present active material is preferably, for example, less than 2 wt%, more preferably less than 1 wt%, and even more preferably less than 0.5 wt%. By having the above-mentioned upper limit for the content of inevitable impurities in the present active material, the decrease in capacity can be suppressed.

The present active material may contain a Si oxide containing Si elements. Examples of the Si oxide include SiOₐ (0 < a ≤ 2). Specific examples thereof include SiO and SiO₂.

### (Content Ratio of Each Component)

The content of Si elements in the present active material is preferably more than 50 wt%. Among them, it is more preferably more than 52 wt%, even more preferably more than 60 wt%, still more preferably more than 63 wt%, and particularly preferably more than 65 wt%. Meanwhile, the content of Si elements in the present active material is preferably, for example, less than 98 wt%, more preferably less than 88 wt%, even more preferably less than 82 wt%, and still more preferably less than 78 wt%.

Here, the content of Si elements refers to the total amount of the Si elements contained in the present active material. Therefore, the content of the Si elements can be mainly the total amount of the Si element derived from silicon and the Si element derived from the compound represented by MₓSiy.

By having the above-mentioned lower limit for the content of Si elements in the present active material, the decrease in capacity can be suppressed. In addition, by having the above-mentioned upper limit for the content of Si elements, the expansion and contraction of the active material can be suppressed, and the cycle characteristics can be improved.

The content of oxygen (O) elements in the present active material is preferably less than 30 wt%. Among them, it is more preferably less than 20 wt%, even more preferably less than 15 wt%, still more preferably less than 10 wt%, and particularly preferably less than 5 wt%. Meanwhile, the content of oxygen (O) elements in the present active material is preferably, for example, more than 0 wt%, more preferably more than 0.1 wt%, even more preferably more than 0.2 wt%, and still more preferably more than 0.6 wt%.

By having the above-mentioned upper limit for the content of oxygen (O) elements in the present active material, the increase in the ratio of oxygen (O) elements that do not contribute to charging and discharging can be suppressed, and the decrease in capacity and charging and discharging efficiency can be suppressed. The so-called SiO (silicon monoxide) is a substance containing approximately 36% oxygen if it has a stoichiometric composition, and is different from the present invention because of its low capacity and charging and discharging efficiency. In addition, by having the above-mentioned lower limit for the content of oxygen (O) elements, the present active material is less likely to cause a rapid reaction with oxygen in the atmosphere.

The content of M in the present active material is preferably less than 38 wt%. Among them, it is more preferably less than 35 wt%, even more preferably less than 32 wt%, and particularly preferably less than 29 wt%. Meanwhile, the content of M in the present active material is preferably more than 2 wt%, more preferably more than 5 wt%, even more preferably more than 8 wt%, and still more preferably more than 12 wt%.

By having the above-mentioned lower limit for the content of M in the present active material, the expansion and contraction of the active material can be suppressed, and the cycle characteristics can be improved. In addition, by having the above-mentioned upper limit for the content of M in the present active material, the decrease in capacity can be suppressed.

The ratio (M/Si) of the content of M (wt%) to the content of Si elements (wt%) in the present active material is preferably, for example, more than 0.020, more preferably more than 0.052, even more preferably more than 0.078, and particularly preferably more than 0.183.

Meanwhile, the ratio (M/Si) of the content of M (wt%) to the content of Si elements (wt%) is preferably, for example, less than 0.961, more preferably less than 0.767, even more preferably less than 0.572, and particularly preferably less than 0.414.

By having the above-mentioned lower limit for the ratio of the content of M to the content of Si elements in the present active material, the expansion and contraction of the active material can be suppressed, and the cycle characteristics can be improved. In addition, by having the above-mentioned upper limit for the ratio of the content of M to the content of Si elements in the present active material, the decrease in capacity can be suppressed.

The content of each of the elements excluding oxygen is the amount of elements quantified by chemical analysis such as inductively coupled plasma (ICP) emission spectroscopy by completely dissolving the present active material.

The oxygen element content can be measured using an oxygen/nitrogen analyzer (for example, manufactured by LECO).

(X-Ray Diffraction Pattern Characteristics 1)

The present active material preferably has a full width at half maximum of a peak A appearing at 2θ = 28.42° ± 1.25° of 0.25° or more in an X-ray diffraction pattern measured by an X-ray diffractometer (XRD) using CuKa1 rays.

The peak A appearing at 2θ = 28.42° ± 1.25° is a peak corresponding to the (111) plane of the space group Fd-3m of silicon.

When a plurality of peaks exist in the range of 2θ = 28.42° ± 1.25°, the peak closest to 2θ = 28.42° is defined as peak A.

The criteria for determining whether or not the peak A appears in the range of 2θ = 28.42° ± 1.25°, that is, the criteria for differentiation from noise, will be described later in Examples, and are omitted here.

Among the range of 2θ = 28.42° ± 1.25° in an X-ray diffraction pattern measured by an X-ray diffractometer (XRD) using CuKa1 rays, the region where the peak A appears may be 2θ = 28.42° ± 0.63°, may be 2θ = 28.42° ± 0.31°, and may be 2θ = 28.42° ± 0.21°.

The full width at half maximum of the peak A is preferably 0.25° or more, more preferably more than 0.50°, even more preferably more than 0.60°, still more preferably more than 0.70°, and particularly preferably more than 0.75°. Meanwhile, the full width at half maximum of the peak A is preferably, for example, less than 2.0°, more preferably less than 1.5°, even more preferably less than 1.2°, and particularly preferably less than 1.0°.

By having the above-mentioned lower limit for the full width at half maximum of the peak A in the present active material, the cycle characteristics can be enhanced, the plateau region in the discharge profile can be reduced or eliminated, and the high-rate discharge characteristics can be improved. In addition, by having the above-mentioned upper limit for the full width at half maximum of the peak A, the decrease in charging and discharging capacity and efficiency can be suppressed.

To adjust the full width at half maximum of the peak A to the above range in the present active material, for example, a predetermined amount of the above M may be added to raw materials, melted, cast, and then subjected to a modification treatment as described later. However, the present invention is not limited to such a method.

When the peak intensity of a peak B belonging to the compound represented by the chemical formula MₓSi_{y} is defined as I_{B} and the peak intensity of the peak A is defined as I_{A}, the present active material preferably has a ratio (I_{A}/I_{B}) of the I_{A} to the I_{B} of less than 1.

Here, the "peak B belonging to the compound represented by the chemical formula MₓSi_{y}" means a peak that appears by the presence of the compound.

Such "peak B" refers to the peak having the maximum peak intensity among the peaks derived from the compound represented by the chemical formula MₓSi_{y}, so-called silicide.

When a plurality of types of MₓSi_{y} exist, the total value of the peak intensities of the maximum peaks derived from each compound is treated as the intensity of "peak B".

In an X-ray diffraction pattern measured by an X-ray diffractometer (XRD) using CuKa1 rays, the region where the peak B appears differs depending on the type of the compound represented by the chemical formula MₓSi_{y}.
As specific examples, the cases of TiSi₂ and Mn₁₁Si₁₉ will be described. It is known that TiSi₂ (ICDD card number: 01-071-0187) has a maximum peak at 2θ = 39.11°, and Mn₁₁Si₁₉ (ICDD card number: 03-065-2862) has a maximum peak at 2θ = 42.00°. However, since these peak positions may shift, it is desirable to look at the entire diffraction pattern and confirm the range of ± 1.25° based on the respective peak positions.

The criteria for determining whether or not the peak B appears are the same as those of the peak A; and the details thereof will be described later in Examples, and are omitted here.

In the present active material, the ratio (I_{A}/I_{B}) of the I_{A} to the I_{B} is more preferably, for example, less than 0.90, even more preferably less than 0.80, still more preferably less than 0.72, and particularly preferably less than 0.40.

In order to suppress the decrease in charging and discharging efficiency, the ratio (I_{A}/I_{B}) of the I_{A} to the I_{B} is preferably more than 0.01, more preferably more than 0.05, and particularly preferably more than 0.10.

By having the above-mentioned upper limit for the ratio (I_{A}/I_{B}) of the I_{A} to the I_{B} in the present active material, the plateau region in the discharge profile can be more reliably reduced or eliminated.

To adjust the ratio (I_{A}/I_{B}) of the I_{A} to the I_{B} to the above range in the present active material, for example, a predetermined amount of the above M may be added to raw materials, melted, cast, and then subjected to a modification treatment as described later. However, the present invention is not limited to such a method.

(X-Ray Diffraction Pattern Characteristics 2)

In the present active material, in an X-ray diffraction pattern measured by an X-ray diffractometer (XRD) using CuKa1 rays, the peak intensity I_{A} of the peak A is preferably, for example, less than 20,000 cps, more preferably less than 7,000 cps, even more preferably less than 4,000 cps, still more preferably less than 3,000 cps, and particularly preferably less than 2,000 cps. Meanwhile, the peak intensity I_{A} of the peak A is preferably, for example, more than 100 cps, more preferably more than 200 cps, and particularly preferably more than 400 cps.

By having the above-mentioned upper limit for the peak intensity I_{A}, the plateau region in the discharge profile can be reduced or eliminated. In addition, by having the above-mentioned lower limit for the peak intensity I_{A}, the decrease in charging and discharging efficiency can be suppressed.

To adjust the peak intensity I_{A} of the peak A to the above range in the present active material, for example, a predetermined amount of the above M may be added to raw materials, melted, cast, and then subjected to a modification treatment as described later. However, the present invention is not limited to such a method.

The above-mentioned Patent Document 4 compares the peak intensities of silicon and silicide, and discloses those having high peak intensities of silicide. However, all of them are inferior in terms of the capacity obtained as the negative electrode active material since the amount of silicide is relatively large with respect to silicon. In contrast, the present active material has a characteristic in that the amount of silicide is below a certain level, that is, the amount of silicon that can contribute to charging and discharging is large, so that the capacity obtained as the negative electrode active material is relatively high, and the peak intensity of silicon is lower than the peak intensity of silicide.

### (D₅₀ and Dₘₐₓ)

The D₅₀ of the present active material, that is, the D₅₀ obtained by the volume-based particle size distribution measured by a laser diffraction scattering-type particle size distribution measurement method is preferably less than 4.0 µm, more preferably less than 3.9 µm, even more preferably less than 3.4 µm, still more preferably less than 3.2 µm, further preferably less than 3.0 µm, and particularly preferably less than 2.8 µm. Furthermore, it is preferably less than 2.5 µm. Meanwhile, the D₅₀ of the present active material is preferably more than 0.01 µm, more preferably more than 0.05 µm, even more preferably more than 0.1 µm, still more preferably more than 0.5 µm, and particularly preferably more than 1.0 µm.

The D₅₀ according to the measurement method of the present invention means a 50% volume-cumulative particle diameter, that is, a cumulative 50% diameter from the finer side in the cumulative percentage notation of the volume-converted particle diameter measurement values in the volume-based particle size distribution chart.

By having the above-mentioned upper limit for the D₅₀ of the present active material, the effects of expansion and contraction can be reduced, and the contact point with the solid electrolyte in the solid-state battery electrode can be secured. In addition, by having the above-mentioned lower limit for the D₅₀ of the present active material, the increase in the number of contact points with the solid electrolyte due to the increase in specific surface area can be suppressed, and the increase in contact resistance can be suppressed.

The D50 of the present active material can be adjusted by changing the crushing and pulverizing conditions. However, the present invention is not limited to these adjustment methods.

The Dₘₐₓ of the present active material, that is, the Dₘₐₓ obtained by the volume-based particle size distribution measured by a laser diffraction scattering-type particle size distribution measurement method is preferably less than 25 µm, more preferably less than 20 µm, even more preferably less than 15 µm, and still more preferably less than 10.0 µm. Meanwhile, the Dₘₐₓ of the present active material is preferably, for example, more than 0.5 µm, more preferably more than 1.0 µm, even more preferably more than 3.0 µm, and still more preferably more than 5.0 µm.

The Dₘₐₓ according to the measurement method means a 100% volume-cumulative particle diameter, that is, a cumulative 100% diameter in the cumulative percentage notation of the volume-converted particle diameter measurement values in the volume-based particle size distribution chart.

By having the above-mentioned upper limit for the Dₘₐₓ of the present active material, the risk of generating a gap with the solid electrolyte in the solid-state battery electrode and the risk of breaking through the separator layer can be reduced.

### (Particle Shape)

The particle shape of the present active material is not particularly limited. For example, a spherical shape, a polyhedral shape, a spindle shape, a plate shape, a scale shape, an indefinite shape, or a combination of those can be used. For example, it has been confirmed that the particles becomes spherical by the gas atomization method, and when pulverized by a jet mill or the like, the particles have an indefinite shape since the particles break along the grain boundaries.

### (True Density)

The true density of the present active material is preferably, for example, more than 2.4 g/cm³, more preferably more than 2.5 g/cm³, even more preferably more than 2.7 g/cm³, and particularly preferably more than 2.9 g/cm³. Meanwhile, the true density of the present active material is preferably, for example, less than 3.9 g/cm³, more preferably less than 3.8 g/cm³, and particularly preferably less than 3.7 g/cm³.

By having the above-mentioned lower limit for the true density of the present active material, the electrode density can be enhanced to improve the energy density. In addition, by having the above-mentioned upper limit for the true density of the present active material, the occurrence of defects, such as a decrease in the content of Si elements in the active material and a decrease in capacity, can be suppressed.

The true density of the present active material can be adjusted by, for example, the amount of M. However, the present invention is not limited to such a method.

### (Specific Surface Area)

The specific surface area (SSA) of the present active material is preferably, for example, more than 2.0 m²/g, more preferably more than 2.5 m²/g, even more preferably more than 3.0 m²/g, and particularly preferably more than 3.3 m²/g. Meanwhile, the specific surface area (SSA) of the present active material is preferably, for example, less than 140.0 m²/g, more preferably less than 60.0 m²/g, even more preferably less than 50.0 m²/g, still more preferably less than 30.0 m²/g, and particularly preferably less than 10.0 m²/g.

By having the above-mentioned lower limit for the SSA of the present active material, the surface can be sufficiently modified to reduce the electrode resistance. In addition, by having the above-mentioned upper limit for the SSA of the present active material, the increase in the number of contact points with the solid electrolyte can be suppressed, and the increase in contact resistance can be suppressed.

The SSA of the present active material can be adjusted by, for example, pulverization conditions or modification conditions. However, the present invention is not limited to these adjustment methods.

### <Method for Producing Present Active Material>

The present active material can be obtained by: mixing silicon or a silicon (Si)-containing material, M or an M-containing material, and optionally other raw materials; heat-melting and alloying the mixture; crushing or pulverizing as necessary; classifying as necessary; and subjecting to a modification treatment using a modifying apparatus utilizing a strong impact force. However, the present invention is not limited to such a method.

Here, the "silicon or silicon (Si)-containing material" means to encompass pure silicon and silicon oxides, as well as silicon-containing materials such as silicon compounds of Si₃N₄, SiC, and the like.

As for the alloying method, any known method can be adopted. For example, in the present active material, silicon or a silicon (Si)-containing material, M or an M-containing material, and optionally other raw materials are mixed and heated to obtain a molten liquid, and the molten liquid may be alloyed by an atomization method or the like. Alternatively, after obtaining a molten liquid as described above, the molten liquid may be cast by a roll casting method and further pulverized in a non-oxygen atmosphere to be alloyed.

Other alloying methods may be adopted.

When the raw materials are heated to obtain a molten liquid as described above, MₓSi_{y} is generated at the time of cooling the molten liquid. However, as a method for melting metals in the present invention, it is preferable not to perform the arc-melting process described in Japanese Patent Laid-Open No. 2010-135336. This is because, as described in paragraph [0029] of Japanese Patent Laid-Open No. 2011-518943 and paragraph [0011] of Japanese Patent Laid-Open No. 2014-513197, oxidation may occur due to residual atmosphere when performing the arc-melting. Once a large amount of oxygen is incorporated into the raw materials, it is difficult to eliminate it in a post process.

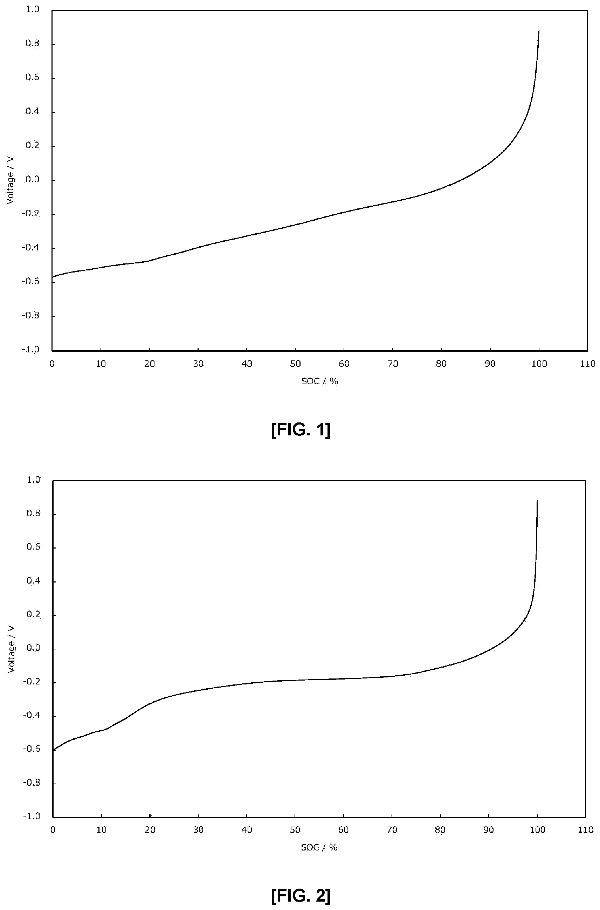

As the atomization method, for example, it is preferable to adopt a method for alloying a molten metal dropped into a cooling medium by utilizing the pressure wave generated by inducing boiling caused through spontaneous nucleation, using an apparatus described in FIG. 2 of WO 01/081033 (this alloying method is referred to herein as "steam explosion atomization method").

After the alloying, it is preferable to adjust the particle size by crushing or pulverizing as necessary, and classifying as necessary.

The modification treatment that is performed using a modifying apparatus utilizing a strong impact force is a modification treatment using an apparatus capable of performing mechanical milling, mechanical alloying, or the like by setting the conditions, and is a treatment capable of enlarging the specific surface area (SSA) of the present active material and setting the ratio (I_{A}/I_{B}) of the I_{A} to the I_{B} to less than 1 as described above.

For example, in a planetary ball mill, such as the one described in Japanese Patent Laid-Open No. 2010-135336, it is difficult to set the ratio (I_{A}/I_{B}) of the I_{A} to the I_{B} to less than 1 in a sample having a large amount of Si elements and a small amount of M, compared to the case of using the above-mentioned apparatus. In addition, when the treatment is performed with a planetary ball mill, a vibrating ball mill, an attritor, a ball mill, or the like, stronger aggregation occurs especially in an active material having a small amount of silicide as in the present invention, and thus the D₅₀ and Dₘₐₓ ranges are larger than those specified by the present invention. This is not suitable as a negative electrode active material used for solid-state batteries.

For example, in the prior art, there has been proposed a production method of silicide in which a Si powder and a powder of an element forming silicide with Si are reacted with each other in a ball mill. However, in that case, the reaction occurs non-uniformly, and thus there is a high risk that the raw material element remains as it is, which is not suitable as a production method for obtaining the desired product of the present invention.

The modification treatment is preferably performed by using, for example, a treatment apparatus equipped with rotating blades in a reaction vessel, setting the peripheral speed of the rotating blades to, for example, 3.0 m/s or more and 20 m/s or less, and using beads having a particle diameter of, for example, approximately 1,500 times or more and 4,000 times or less with respect to the D₅₀ of the present active material as a medium to be charged into the reaction vessel.

Considering that the peripheral speed of the rotating blades in a pin mill is, for example, approximately 100 m/s or more and 130 m/s or less, it can be said that the above-mentioned peripheral speed is slower than that during the fine pulverization treatment. From such a viewpoint, the peripheral speed of the rotating blades is preferably, for example, 4.0 m/s or more or 17 m/s or less, more preferably 4.5 m/s or more or 15 m/s or less, and even more preferably 5.0 m/s or more or 12 m/s or less. Even when the size of the rotating blades is changed, the same effect can be obtained by adjusting the peripheral speed.

The modification treatment is preferably performed in a low oxygen atmosphere, and preferably in an inert atmosphere such as nitrogen or argon.

In a pulverizer such as a bead mill or a ball mill, it is said that the medium to be charged into the reaction vessel can be pulverized to approximately 1/1,000 of its size. Therefore, the use of beads having a particle diameter of, for example, approximately 1,500 times or more and 4,000 times or less with respect to the D50 of the present active material means that the surface modification is preferentially performed than the pulverization.

From such a viewpoint, the particle diameter of the medium to be charged into the reaction vessel is preferably, for example, 4 mmΦ or more and 10 mmΦ or less, more preferably 5 mmΦ or more or 8 mmΦ or less, and even more preferably 6 mmΦ or more or 7 mmΦ or less.

Examples of the material of the medium include SiO₂, Al₂O₃, ZrO₂, SiC, Si₃N₄, and WC; and among them, Al₂O₃, ZrO₂, SiC, and Si₃N₄ are preferred.

### <Applications of Present Active Material>

The present active material can be suitably used as a negative electrode active material for batteries, especially solid-state batteries, among which solid-state secondary batteries such as solid-state lithium secondary batteries. For example, it can be suitably used as a negative electrode active material for solid-state batteries containing a sulfide solid electrolyte as a solid electrolyte.

### <Present Negative Electrode>

The negative electrode according to the present embodiment (hereinafter, referred to as "present negative electrode") contains the present active material.

The present negative electrode is a member composed of a negative electrode mixture.

The negative electrode mixture may contain, for example, the present active material, optionally a binder, optionally a conductive material, optionally a solid electrolyte, and optionally graphite as another negative electrode active material. The present negative electrode can be formed by coating the negative electrode mixture on a negative electrode current collector.

The present negative electrode can be used, for example, in a solid-state battery. Specifically, it can be used in a lithium solid-state battery. The lithium solid-state battery may be a primary or secondary battery, but the present negative electrode is preferably used in a lithium secondary battery.

Here, the "solid-state battery" encompasses a solid-state battery containing no liquid substance or gel substance as an electrolyte, and a solid-state battery containing a small amount, for example, 10 wt% or less of a liquid substance or gel substance as an electrolyte.

### (Binder)

The binder is not particularly limited as long as it is a material that can be used for the negative electrode. Examples thereof include polyimide, polyamide, and polyamideimide. These may be used singly or in combination of two or more kinds thereof (hereinafter, these are also collectively referred to as "polyimide or the like"). In addition, binders other than these may be further used in combination.

The details of the binder can be the same as those of known binders, and the descriptions are thus omitted here.

### (Conductive Material)

The conductive material is not particularly limited as long as it is a material that can be used for the negative electrode. Examples thereof include a fine metal powder and a powder of a conductive carbon material such as acetylene black. In the case of using a fine metal powder as the conductive material, it is preferable to use a fine powder of a metal having lithium ion conductivity, such as Sn, Zn, Ag, or In, or of an alloy of these metals.

### (Solid Electrolyte)

Examples of the solid electrolyte include a sulfide solid electrolyte, an oxide solid electrolyte, a nitride solid electrolyte, and a halide solid electrolyte; and among them, a sulfide solid electrolyte containing a sulfur (S) element is preferred.

The sulfide solid electrolyte may be any of a crystalline material, glass ceramics, and glass. Examples thereof include compounds represented by Li₃PS₄, Li₁₀GeP₂S₁₂, Li_{3.25}Ge_{0.25}P_{0.75}S₄, 30Li₂S·26B₂S₃·44Lil, 63Li₂S·36SiS_{2·}Li₃PO₄, 57Li₂S·38SiS_{2·}5Li₄Si₄, 70Li₂S·30P₂S₅, 50Li₂S·50GeS₂, Li₇P₃S₁₁, Li_{3.25}P_{0.95}S₄, and Li₇₋ₓPS₆₋ₓHaₓ (0.2 < x < 1.8) (Ha represents one or more halogen elements). However, the present invention is not limited to these.

The oxide solid electrolyte, the nitride solid electrolyte, and the halide solid electrolyte can be the same as those of known solid electrolytes, and the descriptions are thus omitted here.

### (Graphite)

As described above, by coexisting the present active material and graphite as the negative electrode active material in the negative electrode mixture, both high capacity resulting from silicon and satisfactory cycle characteristics resulting from graphite can be obtained.

In particular, the present active material has no plateau region or a small plateau region in the discharge profile as described above. Therefore, it is preferable that when used in combination with a carbon material (graphite), a step shape can be prevented from being formed in the discharge profile, and the control can be facilitated when used as a negative electrode active material in combination with a carbon material such as graphite.

In the case of coexisting the present active material and graphite as the negative electrode active material in the negative electrode mixture, it is preferable to adjust the coexistence mass ratio of the present active material and graphite to be 0.5 : 95 to 50 : 50, especially 0.5 : 95 to 20 : 80.

### (Method for Producing Present Negative Electrode)

The present negative electrode can be formed by, for example, mixing the present active material (in particulate form), a binder, a conductive material, a powder of a solid electrolyte, a solvent, and optionally other materials such as a carbon material (graphite) to prepare a negative electrode mixture, coating the negative electrode mixture on the surface of a current collector composed of Cu or the like, drying the resultant, and then pressing the resultant as necessary. Alternatively, it can also be produced by mixing the present active material (in particulate form), a conductive material, a powder of a solid electrolyte, and optionally a carbon material (graphite), press molding the mixture, and then appropriately processing the resultant.

The drying after coating the negative electrode mixture on the surface of the current collector is preferably performed in a non-oxygen atmosphere, for example, in a nitrogen atmosphere or an argon atmosphere, for 1 to 10 hours, especially 1 to 7 hours.

### <Present Solid-State Battery>

Examples of the solid-state battery according to the present embodiment (referred to as "present solid-state battery") include those having a positive electrode, the present negative electrode, and a solid electrolyte layer provided between the positive electrode and the negative electrode. That is, the present active material can be used as a negative electrode active material contained in the negative electrode. In other words, the present active material can be used in a solid-state battery. Specifically, it can be used in a lithium all-solid-state battery. The lithium all-solid-state battery may be a primary or secondary battery, but it is preferably used in a lithium secondary battery.

Examples of the shape of the present solid-state battery include a laminate-type, a cylindrical-type, and a square-type.

### (Solid Electrolyte Layer)

The solid electrolyte layer can be produced by, for example, a method of dropping a slurry containing a solid electrolyte, a binder, and a solvent onto a substrate and rubbing it off with a doctor blade or the like, a method of cutting with an air knife after contacting a substrate with a slurry, or a method of forming a coating film by a screen printing method or the like and then removing the solvent through heating and drying. Alternatively, it can also be produced by press molding a powder of a solid electrolyte and then appropriately processing the resultant.

As the solid electrolyte, any of those described above can be used.

### (Positive Electrode)

The positive electrode can be formed by mixing a positive electrode active material (in particulate form), a binder, a conductive material, a solid electrolyte, and a solvent to prepare a positive electrode mixture, coating the positive electrode mixture on the surface of a current collector, drying the resultant, and then pressing the resultant as necessary. Alternatively, it can also be produced by mixing a positive electrode active material (in particulate form), a conductive material, and a powder of a solid electrolyte, press molding the mixture, and then appropriately processing the resultant.

As the positive electrode active material, any active material conventionally known in the pertinent technical field can be used without any particular limitations. For example, various lithium transition metal composite oxides can be used. Examples of such materials include LiCoO₂, LiNiO₂, LiMnO₂, LiMn₂O₄, LiMn_{1.5}Ni_{0.5}O₄, LiCo_{1/3}Ni_{1/3}Mn_{1/3}O₂, LiCo_{0.5}Ni_{0.5}O₂, LiNi_{0.7}CO_{0.2}Mn_{0.1}O₂, Li(LiₓMn₂ₓCO₁₋₃ₓ)O₂ (where 0 < x < 1/3), LiFePO₄, and LiMn_{1-z}M_{z}PO₄ (where 0 < z ≤ 0.1, and M represents at least one metal element selected from the group consisting of Co, Ni, Fe, Mg, Zn, and Cu).

### <Explanation of Terms and Phrases>

In the case of being expressed as the term "X to Y" (X and Y are arbitrary numbers) in the present description, unless otherwise stated, the term includes the meaning of "preferably more than X" or "preferably less than Y" along with the meaning "X or more and Y or less".

Further, in the case of being expressed as the term "X or more" (X is an arbitrary number) or the term "Y or less" (Y is an arbitrary number), the term also includes the intention of being "preferably more than X" or "preferably less than Y".

### EXAMPLES

Hereinafter, the present invention will be described in more details based on the following Examples and Comparative Examples. However, the present invention is not limited to the following Examples.

### <Example 1 >

Ingots of silicon (Si) and titanium (Ti) were mixed and heated to be melted, and the molten liquid that was heated to 1,700°C was quenched using a liquid quenching solidification apparatus (single roll type) to obtain a quenched thin ribbon alloy. The resulting quenched thin ribbon alloy was roughly pulverized using a dry-type ball mill, and the particle size was adjusted using a dry-type pulverizer under a nitrogen atmosphere (consisting of less than 1% of the air and the balance of vaporized nitrogen from liquid nitrogen (purity of 99.999% or more)) to obtain an alloy powder.

The resulting alloy powder was subjected to a modification treatment using a nanoparticle surface modification apparatus (product name "Simoroyer", equipped with rotating blades in a reaction vessel). That is, 2 kg of ZrO₂ beads and 50 g of the alloy powder were placed in a container having a capacity of 2 L, and treated at 1,500 rpm for 3 hours after adjusting the atmosphere. The treated alloy powder was crushed or pulverized using a dry-type pulverizer to adjust the particle size, and then classified with a sieve having an opening of 75 µm to obtain an alloy powder (sample) as a negative electrode active material.

The resulting alloy powder (sample) was chemically analyzed, and the results were Si: 69 wt% and Ti: 26 wt%.

The amount of the carbon (C) element was 1.0 wt%.

### <Example 2>

Ingots of silicon (Si) and titanium (Ti) were mixed and heated to be melted, and the molten liquid that was heated to 1,700°C was quenched using a liquid quenching solidification apparatus (single roll type) to obtain a quenched thin ribbon alloy. The resulting quenched thin ribbon alloy was roughly pulverized using a dry-type ball mill, and the particle size was adjusted using a dry-type pulverizer under a nitrogen atmosphere (consisting of less than 1% of the air and the balance of vaporized nitrogen from liquid nitrogen (purity of 99.999% or more)) to obtain an alloy powder.

The resulting alloy powder was subjected to a modification treatment using a nanoparticle surface modification apparatus (product name "Simoroyer", equipped with rotating blades in a reaction vessel). That is, 2 kg of ZrO₂ beads and 50 g of the alloy powder were placed in a container having a capacity of 2 L, and treated at 1,500 rpm for 3 hours after adjusting the atmosphere. The treated alloy powder was crushed or pulverized using a dry-type pulverizer to adjust the particle size, and then classified with a sieve having an opening of 75 µm to obtain an alloy powder (sample) as a negative electrode active material.

The resulting alloy powder (sample) was chemically analyzed, and the results were Si: 73 wt% and Ti: 22 wt%.

The amount of the carbon (C) element was 0.6 wt%.

### <Example 3>

Ingots of silicon (Si) and titanium (Ti) were heated to be melted, and the molten liquid that was heated to 1,700°C was quenched using a liquid quenching solidification apparatus (single roll type) to obtain a quenched thin ribbon alloy. The resulting quenched thin ribbon alloy was roughly pulverized using a dry-type ball mill, and the particle size was adjusted using a dry-type pulverizer under a nitrogen atmosphere (consisting of less than 1% of the air and the balance of vaporized nitrogen from liquid nitrogen (purity of 99.999% or more)) to obtain an alloy powder.

The resulting alloy powder was subjected to a modification treatment using a nanoparticle surface modification apparatus (product name "Simoroyer", equipped with rotating blades in a reaction vessel). That is, 2 kg of ZrO₂ beads and 50 g of the alloy powder were placed in a container having a capacity of 2 L, and treated at 1,500 rpm for 3 hours after adjusting the atmosphere. The treated alloy powder was crushed or pulverized using a dry-type pulverizer to adjust the particle size, and then classified with a sieve having an opening of 75 µm to obtain an alloy powder (sample) as a negative electrode active material.

The resulting alloy powder (sample) was chemically analyzed, and the results were Si: 78 wt% and Ti: 17 wt%.

The amount of the carbon (C) element was 0.5 wt%.

### <Example 4>

Ingots of silicon (Si) and titanium (Ti) were mixed and heated to be melted, and the molten liquid that was heated to 1,700°C was quenched using a liquid quenching solidification apparatus (single roll type) to obtain a quenched thin ribbon alloy. The resulting quenched thin ribbon alloy was roughly pulverized using a dry-type ball mill, and the particle size was adjusted using a dry-type pulverizer under a nitrogen atmosphere (consisting of less than 1% of the air and the balance of vaporized nitrogen from liquid nitrogen (purity of 99.999% or more)) to obtain an alloy powder.

The resulting alloy powder was subjected to a modification treatment using a nanoparticle surface modification apparatus (product name "Simoroyer", equipped with rotating blades in a reaction vessel). That is, 2 kg of Si₃N₄ beads and 50 g of the alloy powder were placed in a container having a capacity of 2 L, and treated at 1,500 rpm for 3 hours after adjusting the atmosphere. The treated alloy powder was crushed or pulverized using a dry-type pulverizer to adjust the particle size, and then classified with a sieve having an opening of 75 µm to obtain an alloy powder (sample) as a negative electrode active material.

The resulting alloy powder (sample) was chemically analyzed, and the results were Si: 68 wt% and Ti: 23 wt%.

The amount of the carbon (C) element was 1.2 wt%.

### <Example 5>

Ingots of silicon (Si), titanium (Ti), and manganese (Mn) were mixed and heated to be melted, and the molten liquid that was heated to 1,700°C was quenched using a liquid quenching solidification apparatus (single roll type) to obtain a quenched thin ribbon alloy. The resulting quenched thin ribbon alloy was roughly pulverized using a dry-type ball mill, and the particle size was adjusted using a dry-type pulverizer under a nitrogen atmosphere (consisting of less than 1% of the air and the balance of vaporized nitrogen from liquid nitrogen (purity of 99.999% or more)) to obtain an alloy powder.

The resulting alloy powder was subjected to a modification treatment using a nanoparticle surface modification apparatus (product name "Simoroyer", equipped with rotating blades in a reaction vessel). That is, 2 kg of ZrO₂ beads and 50 g of the alloy powder were placed in a container having a capacity of 2 L, and treated at 1,500 rpm for 3 hours after adjusting the atmosphere. The treated alloy powder was crushed or pulverized using a dry-type pulverizer to adjust the particle size, and then classified with a sieve having an opening of 75 µm to obtain an alloy powder (sample) as a negative electrode active material.

The resulting alloy powder (sample) was chemically analyzed, and the results were Si: 71 wt%, Ti: 16 wt%, and Mn: 10 wt%. The amount of the carbon (C) element was 0.6 wt%.

### <Example 6>

Ingots of silicon (Si), titanium (Ti), boron (B), and aluminum (Al) were mixed and heated to be melted, and the molten liquid that was heated to 1,700°C was quenched using a liquid quenching solidification apparatus (single roll type) to obtain a quenched thin ribbon alloy. The resulting quenched thin ribbon alloy was roughly pulverized using a dry-type ball mill, and the particle size was adjusted using a dry-type pulverizer under a nitrogen atmosphere (consisting of less than 1% of the air and the balance of vaporized nitrogen from liquid nitrogen (purity of 99.999% or more)) to obtain an alloy powder.

The resulting alloy powder was subjected to a modification treatment using a nanoparticle surface modification apparatus (product name "Simoroyer", equipped with rotating blades in a reaction vessel). That is, 2 kg of ZrO₂ beads and 50 g of the alloy powder were placed in a container having a capacity of 2 L, and treated at 1,500 rpm for 3 hours after adjusting the atmosphere.

The treated alloy powder was crushed or pulverized using a dry-type pulverizer to adjust the particle size, and then classified with a sieve having an opening of 75 µm to obtain an alloy powder (sample) as a negative electrode active material.

The resulting alloy powder (sample) was chemically analyzed, and the results were Si: 66 wt%, Ti: 24 wt%, B: 0.01 wt%, and Al: 0.10 wt%. The amount of the carbon (C) element was 0.3 wt%.

### <Example 7>

Ingots of silicon (Si), titanium (Ti), and boron (B) were mixed and heated to be melted, and the molten liquid that was heated to 1,700°C was quenched using a liquid quenching solidification apparatus (single roll type) to obtain a quenched thin ribbon alloy. The resulting quenched thin ribbon alloy was roughly pulverized using a dry-type ball mill, and the particle size was adjusted using a dry-type pulverizer under a nitrogen atmosphere (consisting of less than 1% of the air and the balance of vaporized nitrogen from liquid nitrogen (purity of 99.999% or more)) to obtain an alloy powder.

The resulting alloy powder was subjected to a modification treatment using a nanoparticle surface modification apparatus (product name "Simoroyer", equipped with rotating blades in a reaction vessel). That is, 1.2 kg of Al₂O₃ beads and 50 g of the alloy powder were placed in a container having a capacity of 2 L, and treated at 1,500 rpm for 3 hours after adjusting the atmosphere.

The treated alloy powder was crushed or pulverized using a dry-type pulverizer to adjust the particle size, and then classified with a sieve having an opening of 75 µm to obtain an alloy powder (sample) as a negative electrode active material.

The resulting alloy powder (sample) was chemically analyzed, and the results were Si: 65 wt%, Ti: 24 wt%, and B: 0.01 wt%. The amount of the carbon (C) element was 1.0 wt%.

### <Comparative Example 1 >

An ingot of silicon (Si) was heated to be melted, and the molten liquid that was heated to 1,700°C was quenched using a liquid quenching solidification apparatus (single roll type) to obtain a quenched thin ribbon metal. The resulting quenched thin ribbon metal was roughly pulverized using a dry-type ball mill, and the particle size was adjusted using a dry-type pulverizer under a nitrogen atmosphere (consisting of less than 1% of the air and the balance of vaporized nitrogen from liquid nitrogen (purity of 99.999% or more)) to obtain a metal powder (sample).

The resulting metal powder (sample) was chemically analyzed, and the result was Si: 99 wt%.

### <Comparative Example 2>

An ingot of silicon (Si) and massive titanium were mixed at an atomic ratio of 85 : 15 (weight ratio of 76.8 : 23.2) and melted using a liquid quenching solidification apparatus (single roll type), and the molten metal was sprayed with an argon gas onto a rotating copper roll to be quenched, thereby producing a Si-Ti alloy. Then, the Si-Ti alloy was pulverized for 2 hours using a silicon nitride ball under an argon gas atmosphere in a planetary ball mill apparatus, to obtain an electrode material of an alloy powder (sample).

### <Comparative Example 3>

Si and B were used as the solid phase A, and these were mixed to obtain a mixture having a weight ratio of 19.9 : 0.1. The mixture was charged into a high-frequency melting vessel and melted, and the resulting molten alloy was quenched and solidified by a single roll method to obtain a first alloy ingot. In addition, Ti and Si were used as the solid phase B, and these were mixed to obtain a mixture having an atomic ratio of 1 : 2. The mixture was charged into a high-frequency melting vessel and melted, and the resulting molten alloy was quenched and solidified by a single roll method to obtain a second alloy ingot composed of an intermetallic compound represented by a compositional formula of TiSi₂. Then, the mixture in which the first alloy ingot and the second alloy ingot were mixed at a weight ratio of 20 : 80 was charged into a container of a planetary ball mill, and pulverized for 1 hour to obtain an electrode material of an alloy powder (sample).

### <Comparative Example 4>

Si and Ti were mixed and melted in an Ar atmosphere using high-frequency induction melting, and the resulting molten material was gas-atomized to obtain alloy particles. The resulting alloy particles (sample) were chemically analyzed, and the results were Si: 70 wt% and Ti: 26 wt%.

### <Reference Example 1 >

An ingot of silicon (Si) and massive titanium were mixed at an atomic ratio of 85 : 15 and melted using a liquid quenching solidification apparatus (single roll type), and the molten metal was sprayed with an argon gas onto a rotating copper roll to be quenched, thereby producing a Si-Ti alloy. Then, the Si-Ti alloy was roughly pulverized using a dry-type ball mill to obtain an alloy powder (sample).

### <Reference Example 2>

First, Si and Ti were mixed at a ratio of 81 at% Si to 19 at% Ti and melted in an Ar atmosphere using high-frequency induction melting, and the resulting molten material was gas-atomized to obtain alloy particles. The D50 of the alloy particles was 29 µm.

Next, the alloy particles and natural graphite were mixed at a ratio of alloy particles/natural graphite = 95/5 on a mass basis, and nickel (Ni) was added as a conductivity improver in an amount of 5% by mass relative to the total weight of the alloy particles and the natural graphite to prepare a mixed powder. The resulting mixed powder was subjected to a mechanical alloying treatment for 30 hours using a planetary ball mill (spherical medium made of zirconia) to obtain a negative electrode material (sample).

### <Method for Measuring Various Physical Property Values>

Various physical property values of the alloy powder (sample) (hereinafter, including the metal powder (sample)) obtained in each of Examples and Comparative Examples were measured as follows.

### (Composition Analysis)

As for the alloy powder (sample) obtained in each of Examples and Comparative Examples, the content of each element was measured by inductively coupled plasma (ICP) emission spectroscopy. However, the content of oxygen was measured using an oxygen/nitrogen analyzer (manufactured by LECO Corp.). The content of carbon was measured using a carbon/sulfur analyzer (manufactured by HORIBA, Ltd.).

### (D₅₀ and Dₘₐₓ)

First, 0.15 g of the alloy powder (sample) obtained in each of Examples and Comparative Examples and 50 ml of ion-exchanged water added with 20 vol% of ethanol were charged into a 50 ml beaker, the beaker was set in an ultrasonic homogenizer (ultrasonic homogenizer US-150E, manufactured by Nihonseiki Kaisha Ltd., with a tip of 20 φ), the dial level was adjusted such that the AMPLITUDE was 80%, and ultrasonic waves were applied for 5 minutes to disperse the sample in the liquid, thereby obtaining a dispersion liquid.

Next, using an automatic sample feeder for laser diffraction particle diameter distribution measuring apparatus ("Microtorac SDC", manufactured by MicrotoracBEL Corp.), and the dispersion liquid was charged into a water-soluble solvent (ion-exchanged water containing 20 vol% ethanol). The particle size distribution was measured at a flow rate of 70 mL/sec using a laser diffraction particle size distribution analyzer "MT3300ll" manufactured by MicrotoracBEL Corp., and D₅₀ and Dₘₐₓ were determined from the measured volume-based particle size distribution chart.

Here, the water-soluble solvent used in the measurement was passed through a 60 µm filter, the solvent refractive index was 1.33, the particle permeability condition was reflection, the measurement range was 0.021 to 2,000 µm, the measurement time was 10 seconds, and the value obtained by one measurement was used as the measurement value.

### (Specific Surface Area: SSA)

The specific surface area (SSA) of the alloy powder (sample) obtained in each of Examples and Comparative Examples was measured as follows.

First, 1.0 g of the sample (powder) was weighed in a glass cell (standard cell) for an automatic specific surface area analyzer, Macsorb (manufactured by Mountech Co., Ltd.), and was set in an auto sampler. The inside atmosphere of the glass was replaced with nitrogen gas, and the sample was then subjected to a heat treatment at 250°C for 15 minutes in the nitrogen gas atmosphere. Thereafter, it was cooled for 4 minutes while allowing a mixed gas of nitrogen and helium to flow. After cooling, the sample was measured by a BET single point method.

Here, as the adsorption gas at the time of the cooling and measurement, a mixed gas of 30 vol% of nitrogen and 70 vol% of helium was used.

### (True Density)

The true density of the alloy powder (sample) obtained in each of Examples and Comparative Examples was measured as follows.

First, the sample (powder) was charged into a 10 cm³ sample basket up to seven-tenths full, and the amount of the charged sample was measured. Next, the sample basket containing the sample was set in a true density analyzer, BEL Pycno (manufactured by Mountech Co., Ltd.), and the lid of the apparatus was closed to start measurement.

Here, helium gas was used for the measurement, and the temperature of the measurement portion was controlled at 25°C ± 0.1 °C.

### (X-Ray Diffraction)

Using an X-ray diffractometer (XRD) (apparatus name: "Ultima IV", manufactured by Rigaku Corp.) using CuKa1 rays, the measurement was performed under the following measurement conditions 1 to obtain an X-ray diffraction pattern (also referred to as "XRD pattern").

### =XRD Measurement Conditions 1 =

X-ray source: CuKa (line focus), wavelength: 1.541836 Å
Operation axis: 2θ/θ, measurement method: continuous, counting unit: cps
Initiation angle: 15.0°, termination angle: 120.0°, number of integration times: 1 time
Sampling width: 0.01°, scanning speed: 1.0°/min
Voltage: 40 kV, current: 40 mA
Divergence slit: 0.2 mm, divergence vertical restriction slit: 10 mm
Scattering slit: opening, light-receiving slit: opening
Offset angle: 0°
Goniometer radius: 285 mm, optical system: focusing method
Attachment: ASC-48
Slit: slit for D/teX Ultra
Detector: D/teX Ultra
Incident-monochro: CBO
Ni-Kβ filter: None
Speed of revolution: 50 rpm

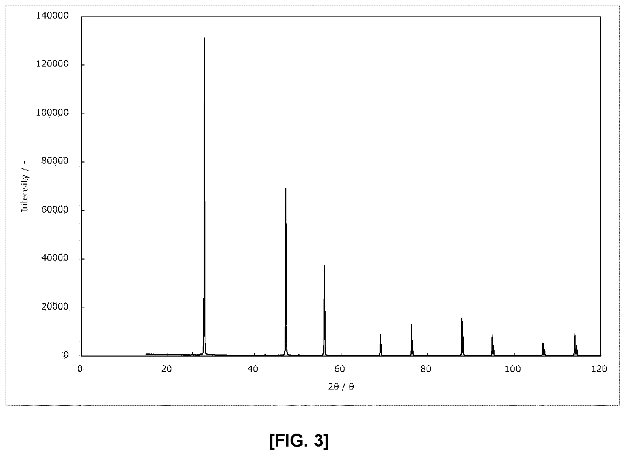

The XRD measurement conditions were set, and a silicon powder material (e.g. SRM640e), which was a standard sample for X-ray diffraction manufactured by NIST, was measured. FIG. 3 shows an XRD pattern of a silicon powder material (e.g. SRM640e), which is a standard sample for X-ray diffraction manufactured by NIST. The diffraction peak positions and the number of peaks were confirmed by comparing with the card information of ICDD card number: 00-005-0565 (chemical formula: Si). It was then confirmed that the XRD measurement conditions were set correctly by using indexes of whether or not the diffraction peak positions and the number of peaks were equivalent to the card information and the peak appearing at 2θ = 28.42° ± 1.25° had a peak intensity I of approximately 120,000 cps to 130,000 cps.

In the obtained XRD pattern, it was confirmed that there was no clear peak at 2θ = 16.5° ± 1.5°, and the average value of cps in this range was defined as the intensity I_{BG} of the background (BG).

When a peak existed in the above range, a 2θ range suitable for defining the intensity I_{BG} of the background (BG) was selected.

Then, based on the card information of ICDD card number: 00-005-0565 (chemical formula: Si), the difference between the peak intensity I_{A} of the peak A and the intensity I_{BG} of the background (BG) was defined as the peak intensity I_{A} of the peak A. The peak A was a peak corresponding to the (111) plane of Si having a crystal structure of the space group Fd-3m.

The full width at half maximum (FWHM) of the peak A was then determined, and shown in the table as the full width at half maximum of the peak on the (111) plane of Si in the space group Fd-3m.

Here, a method for identifying a compound represented by MₓSi_{y} will be described.

The M element in the above compound was assumed from the result of the chemical analysis, and the identification was performed on the assumption that the compound (MₓSi_{y}) containing the M and Si elements was formed. The XRD pattern data for analysis was read using analysis software (product name "PDXL"). The identification was then performed by selecting automatic search. All sub-files were selected as automatic search targets, and the automatic search was performed by setting the element filter so as to include the M and Si elements.

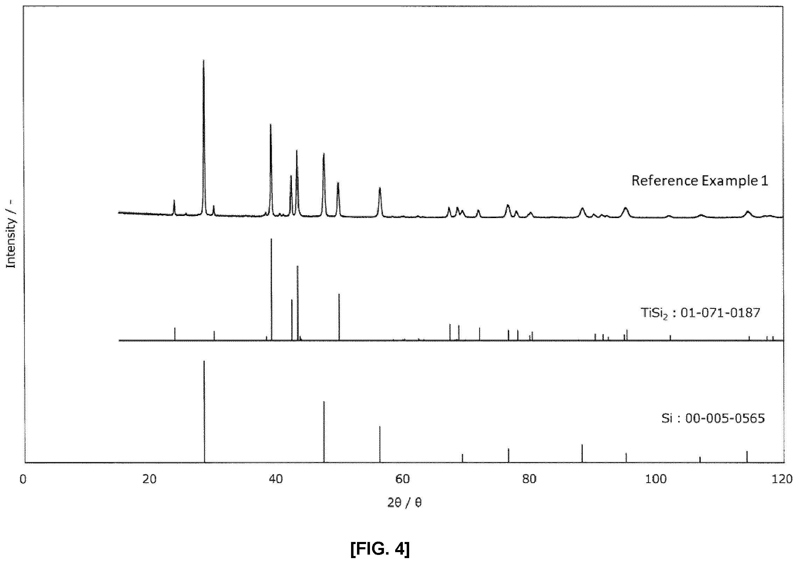

The automatic search picked up several card numbers as the result of the crystal phase search, and a crystal phase candidate having high consistency of the peak was selected from them. Then, the conformity between the peak position in the XRD pattern data to be analyzed and the peak position of the selected crystal phase candidate was confirmed. FIG. 4 shows a graph collating cards having ICDD card numbers: 00-005-0565 (chemical formula: Si) and 01-071-0187 (chemical formula: TiSi₂) with reference to Reference Example 1. When the peaks capable of belonging to each compound were confirmed as described above, it was used as is, and when there was a deviation between the peak positions or the numbers of the peaks, another crystal phase candidate was manually reselected from the picked up card numbers as the result of the crystal phase search. When reselecting the card, the reliability (Quality) of the card set in the ICDD cards was referred to, and the card was reselected in decreasing order of Quality (S → I → B) to confirm the peak positions.

Note that when there are factors that reduce the overall peak intensity, for example, when the content of silicon or compound is low, only the peaks having relatively high intensity may be observed among the peaks described in the ICDD cards, and the peaks having relatively low intensity may not be observed.

The ICDD card number of the selected compound (MₓSi_{y}) containing the M and Si elements was read as described above, and when the peak intensity of the peak B having the maximum intensity was defined as the peak intensity I_{B} in the region where the main peak belonging to the compound appears (for example, around 2θ = 39.11° in the case of TiSi₂ of ICDD card number 01-071-0187), the difference between the peak intensity I_{B} and the intensity I_{BG} of the background (BG) was defined as the peak intensity I_{B} of the compound (MₓSi_{y}).

Then, the ratio of the peak intensity I_{A} of the peak A to the peak intensity I_{B} of the peak B belonging to the compound (MₓSi_{y}) was shown in Table 1.

### <Evaluation of Battery Characteristics>

### (Production of Battery)

The alloy powder (sample) obtained in each of Examples and Comparative Examples was used as the negative electrode active material to prepare an electrode mixture, and a sulfide-based all-solid-state battery was produced to evaluate the battery characteristics. An In/Li foil was used for the counter electrode, and a powder represented by composition formula: Li_{5.4}PS_{4.4}C_{10.8}Br_{0.8} was used as the solid electrolyte powder.

### (Mixture Preparation)

The electrode mixture powder was prepared by mixing the active material powder, the solid electrolyte powder, and a conductive agent (VGCF (registered trademark)) powder in a mortar at a mass ratio of 4.5: 86.2: 9.3, and then uniaxially press-molded at 10 MPa to obtain a mixture pellet.

### (Production of Solid-State Battery Cell)

The lower opening of a ceramic cylinder (opening diameter of 10 mm) with upper and lower openings was closed with an electrode (made of SUS), 0.10 g of the solid electrolyte was charged therein, the upper opening was closed with another electrode to sandwich the solid electrolyte, and the resultant was uniaxially press-molded at 10 MPa to prepare an electrolyte layer. The upper electrode was once detached, the electrode mixture pellet composed of the silicon active material was inserted therein, the upper electrode was reattached, and the resultant was uniaxially press-molded at 42 MPa to press-bond the mixture pellet and the electrolyte layer. The lower electrode was once detached, the In/Li foil was inserted therein, the lower electrode was reattached, and the upper and lower electrodes were screwed in four places with a torque pressure of 6 N·m, thereby producing an all-solid-state battery equivalent to 1.6 mAh. In the production of the all-solid-state battery cell, the process was performed in a glove box replaced with dry air having an average dew point of -45°C.

### (Evaluation of Charge Capacity)

The capacity confirmation in the battery characteristics evaluation was carried out by placing the all-solid-state battery into an environmental test chamber maintained at 25°C and connecting the battery with a charge-discharge measurement apparatus. Since the cell capacity was 1.6 mAh, 1 C corresponded to 1.6 mA. As for charging and discharging of the battery, the battery was charged to -0.62 V at 0.1 C by the CC-CV mode (charging ended when the current value reached 0.01 C) to obtain the initial charge capacity. The battery was discharged to 0.88 V at 0.1 C by the CC mode.

The recording interval during charging and discharging was set such that one point was recorded when either every 10 seconds or every 1 mV change was met. With such a setting, the data could be recorded every 10 seconds in areas with small voltage fluctuations, and every 1 mV change in areas with large voltage fluctuations.

Samples having an initial charge capacity of more than 3,000 mAh/g were classified as "A", samples having an initial charge capacity of 1,200 mAh/g or more and 3,000 mAh/g or less were classified as "B", and samples having an initial charge capacity of less than 1,200 mAh/g were classified as "C"; and the results were shown in Table 2. Those classified as C were not worthy of evaluation because of insufficient capacity, and the subsequent measurements were discontinued.

### (Discharge Profile Shape Evaluation)

Based on the discharge curve obtained above, the "discharge profile shape" was determined. That is, the obtained discharge curve was linearly approximated, and the values of the correlation coefficients were compared and used as an index of the "discharge profile shape".

In Table 2, the results are shown as relative values when the numerical value in Comparative Example 2 is set to 100. Here, when the electric potential changes continuously in a period from the initial stage to the last stage of discharge, that is, when the linearity is high, the correlation coefficient in the linear approximation becomes high, indicating that there is no plateau region or small plateau region.

### (High-Rate Characteristics Evaluation)

The above-mentioned cell after charging and discharging was used to evaluate the high-rate characteristics. The evaluation was continued in the environmental test chamber maintained at 25°C. The battery capacity was calculated based on the above-mentioned charge capacity, and the C rate was determined.

The cell was charged to -0.62 V at 0.1 C by the CC-CV mode (charging ended when the current value reached 0.01 C), and was discharged to 0.88 V at 0.1 C by the CC mode. The discharge capacity at this time was defined as 0.1 C discharge capacity (A).

Subsequently, the cell was charged to -0.62 V at 0.1 C by the CC-CV mode (charging ended when the current value reached 0.01 C), and was discharged to 0.88 V at 5 C by the CC mode. The discharge capacity at this time was defined as 5 C discharge capacity.

The "5 C discharge capacity / 0.1 C discharge capacity (A) × 100" was calculated and evaluated as the high-rate characteristics value. In Table 2, the results are shown as relative values when the numerical value in Comparative Example 2 is set to 100.

### (Cycle Characteristics Evaluation)

The cycle characteristics evaluation was performed using the cell for which the above-mentioned high-rate characteristics evaluation was performed. The evaluation was continued in the environmental test chamber maintained at 25°C. First, as a preliminary preparation, in order to perform the residual discharge of the above-mentioned cell, the initial current value was set to 5 C, and the cell was discharged to 0.88 V by the CV mode (discharging ended when the current value reached 0.01 C).

Next, the cell was charged to -0.62 V at 0.1 C by the CC-CV mode (charging ended when the current value reached 0.01 C), and was discharged to 0.88 V at 0.1 C by the CC mode. The discharge capacity at this time was defined as 0.1 C discharge capacity (B).

The "0.1 C discharge capacity (B) / 0.1 C discharge capacity (A) × 100" was calculated and evaluated as the cycle characteristics value. In Table 2, the results are shown as relative values when the numerical value in Comparative Example 2 is set to 100.

**[Table 1]**

| | | Examp le 1 | Examp le 2 | Examp le 3 | Examp le 4 | Examp le 5 | Examp le 6 | Examp le 7 | Comparative Example 1 | Comparative Example 2 | Comparative Example 3 | Comparative Example 4 |
|---|---|---|---|---|---|---|---|---|---|---|---|---|
| Si element (content) | wt % | 69 | 73 | 78 | 68 | 71 | 66 | 65 | 99 | 76 | 63 | 70 |
| O element (content) | wt % | 2.6 | 2.2 | 2.4 | 3.4 | 2.2 | 5.5 | 6.1 | 0.6 | - | - | - |
| M (type) | - | Ti | Ti | Ti | Ti | Ti, Mn | Ti | Ti | - | Ti | Ti | Ti |
| M (content) | wt % | 26 | 22 | 17 | 23 | 26 | 24 | 24 | - | 23 | 37 | 26 |
| D₅₀ | µm | 2.2 | 2.4 | 2.2 | 3.4 | 2.1 | 2.0 | 1.8 | 2.7 | 4.9 | 3.9 | 18.9 |
| Dmax | µm | 9 | 8 | 8 | 22 | 9 | 6.5 | 5.5 | 8 | 88 | 26 | 62 |
| Si(111) full width at half maximum (FWHM) | ∘ | 0.62 | 0.84 | 0.91 | 0.65 | 0.90 | 0.6 | 0.4 | 0.13 | 0.21 | 0.13 | 0.21 |
| I_{A} /I_{B} | - | 0.15 | 0.34 | 0.71 | 0.28 | 0.18 | 0.2 | 0.1 | - | 1.83 | 1.04 | 1.38 |
| Intensity of peak A | cps | 469 | 1102 | 1975 | 678 | 664 | 376 | 236 | 82962 | 7151 | 7025 | 10298 |
| True density | g/c m³ | 3.1 | 3.0 | 2.8 | 3.3 | 3.2 | 3.3 | 3.1 | 2.4 | 3.0 | 3.7 | 3.2 |
| SSA | m²/ g | 5.9 | 6.2 | 7.8 | 5.1 | 4.9 | 5.0 | 7.5 | 2.7 | 4.6 | 1.6 | 0.2 |
| C | wt % | 1.0 | 0.6 | 0.5 | 1.2 | 0.6 | 0.3 | 1.0 | 0.1 | - | - | - |

**[Table 2]**

| | | Exampl e 1 | Exampl e 2 | Exampl e 3 | Exampl e 4 | Exampl e 5 | Com parati ve Example 1 | Com parati ve Example 2 | Com parati ve Example 3 | Com parati ve Example 4 |
|---|---|---|---|---|---|---|---|---|---|---|
| Charge capacity | | B | B | B | B | B | A | B | C | B |
| Discharge profile shape | - | 102 | 102 | 101 | 102 | 102 | 99 | 100 | 98 | 100 |
| High-rate characteristic s | - | 115 | 114 | 113 | 116 | 117 | 63 | 100 | - | 67 |
| Cycle characteristic s | - | 113 | 111 | 113 | 120 | 120 | 58 | 100 | - | 99 |

From the results of the above Examples and the tests carried out by the present inventors so far, it is found that the active material contains silicon and a compound represented by chemical formula MₓSi_{y} (where x and y satisfy 0.1 ≤ x/y ≤ 7.0, and M represents one or two or more of metalloid elements other than Si and metal elements), wherein the content of Si elements in the active material is more than 50 wt%, the content of metalloid and metal element M is less than 38 wt%, the content of oxygen (O) elements is less than 30 wt%, with regard to D₅₀ and Dₘₐₓ measured by a laser diffraction scattering-type particle size distribution measurement method (referred to as "D₅₀" and "Dₘₐₓ" respectively), the D₅₀ is less than 4.0 µm and the Dₘₐₓ is less than 25 µm,
in an X-ray diffraction pattern measured by an X-ray diffractometer (XRD) using CuKα1 rays, the full width at half maximum of a peak A appearing at 2θ = 28.42° ± 1.25° is 0.25° or more, and when the peak intensity of a peak B belonging to the compound represented by the chemical formula MₓSi_{y} is defined as I_{B} and the peak intensity of the peak A is defined as I_{A}, the ratio (I_{A}/I_{B}) of the I_{A} to the I_{B} is less than 1, so that the cycle characteristics can be enhanced, the plateau region in the discharge profile can be reduced or eliminated, and the high-rate characteristics can be improved.

For Reference Example 2, the charge capacity was evaluated using a non-aqueous electrolyte secondary battery.

The sample, a conductive material, and a binder were mixed in a mixing ratio of 85 : 5 : 10 (% by weight), and the mixture was dispersed into N-methyl pyrrolidone to obtain a negative electrode mixture. As the conductive material, acetylene black was used. As the binder, polyimide was used. The negative electrode mixture was coated on an electrolytic copper foil having a thickness of 15 µm. The coating was dried to form a negative electrode active material layer, thereby obtaining a negative electrode.

The amount of coating was determined in consideration of the surface capacity (mAh/cm²). As an example, the surface capacity was aligned at 2.8 mAh/cm² for evaluation. For example, in the case of Pure-Si, when the charge capacity is set to 4,200 mAh/g, 85 wt% of the sample is contained in the negative electrode active material, and thus the coating amount of the negative electrode active material layer is 0.78 mg/cm². If the sample has a charge capacity lower than 4,200 mAh/g, the coating amount needs to be increased in order to obtain the same surface capacity.

### (Production of Battery)

The negative electrode thus obtained was punched into a circle having a diameter of 14 mmφ, and was subjected to vacuum drying at 160°C for 6 hours. Then, an electrochemical evaluation cell TOMCEL (registered trademark) was fabricated in a glove box under an argon atmosphere. For the counter electrode, metal lithium was used. For the electrolyte, an electrolyte obtained by dissolving LiPF₆ into a carbonate-based mixed solvent so as to be 1 mol/I was used. For the separator, a polypropylene porous film was used.

### (Battery Performance Evaluation Test)

The electrochemical evaluation cell TOMCEL (registered trademark) prepared as described above was subjected to initial activation by the following method. The prepared electrochemical evaluation cell TOMCEL (registered trademark) was allowed to stand for 6 hours, then charged to 0.01 V in 0.1 C by constant current/constant potential (charging ended when the current value reached 0.01 C) at 25°C, and then discharged to 1.0 V in 0.1 C by constant current.

The recording interval during charging and discharging was set to be recorded when either every 300 seconds or every 5.0 mV change was met. With such a setting, the data could be recorded every 300 seconds in areas with small voltage fluctuations, and every 5.0 mV change in areas with large voltage fluctuations. This process was repeated in three cycles. Here, the current value actually set was calculated from the content of the negative electrode active material in the negative electrode.

As described above, the sample in which Si, natural graphite, and conductivity improver were combined as in Reference Example 2 was evaluated, and the initial charge capacity was less than 1,200 mAh/g. It is found that the capacity is very small compared to the charge capacity expected from the relationship between the amount of Si that contributes to Li storage and release assumed from each wt% and the theoretical capacity of Si.

The reason for this is not certain, but one factor is that the Li storage potentials of Si and natural graphite are different. It is considered that, when the ratio is Si > natural graphite and the carbon amount is 5% by mass or more, the Li storage in the natural graphite starts in parallel before the Li storage in the relatively large amount of Si is completed, the potential is then lowered to easily satisfy the charging start/end conditions, and thus the charging capacity is decreased.

It is also considered that such a capacity decrease is greatly affected by the Li storage performance of the composite active material itself, and thus the same capacity decrease occurs even in the evaluation using a solid-state battery.

## Claims

1. An active material, comprising silicon and a compound represented by chemical formula MₓSi_{y} (where x and y satisfy 0.1 ≤ x/y ≤ 7.0, and M represents one or two or more of metalloid elements other than Si and metal elements),
wherein the content of Si elements in the active material is more than 50 wt%, the content of M in the active material is less than 38 wt%, and the content of oxygen (O) elements in the active material is less than 30 wt%;
wherein, with regard to D₅₀ and Dₘₐₓ measured by a laser diffraction scattering-type particle size distribution measurement method (referred to as "D₅₀" and "Dₘₐₓ" respectively), the D₅₀ is less than 4.0 µm and the Dₘₐₓ is less than 25 µm; and
wherein, in an X-ray diffraction pattern measured by an X-ray diffractometer (XRD) using CuKα1 rays, the full width at half maximum of a peak A appearing at 2θ= 28.42° ± 1.25° is 0.25° or more, and when the peak intensity of a peak B belonging to the compound represented by the chemical formula MₓSi_{y} is defined as I_{B} and the peak intensity of the peak A is defined as I_{A}, the ratio (I_{A}/I_{B}) of the I_{A} to the I_{B} is less than 1.

2. The active material according to claim 1, wherein M comprises one or two or more elements of B, Ti, V, Mn, Fe, Co, Ni, Cu, Y, Zr, Nb, Mo, Ta, and W.

3. The active material according to claim 1, wherein M comprises one or two or more elements of B, Ti, Mn, and Fe.

4. The active material according to any one of claims 1 to 3, having a content of carbon (C) elements of less than 5 wt%.

5. The active material according to any one of claims 1 to 4, having a true density larger than 2.4 g/cm³.

6. The active material according to any one of claims 1 to 5, having a specific surface area (SSA) larger than 2.0 m²/g.

7. The active material according to any one of claims 1 to 6, having a specific surface area (SSA) smaller than 60.0 m²/g.

8. The active material according to any one of claims 1 to 7, which is used as a negative electrode active material for a lithium secondary battery.

9. The active material according to any one of claims 1 to 7, which is used as a negative electrode active material for a solid-state lithium secondary battery.

10. A negative electrode, comprising the active material according to any one of claims 1 to 7.

11. A solid-state battery, comprising a positive electrode, a negative electrode, and a solid electrolyte layer provided between the positive electrode and the negative electrode, wherein the negative electrode comprises the active material according to any one of claims 1 to 7.
